# EUROPÄISCHE PATENTSCHRIFT

(11) **EP 3 381 254 B1**
(45) Veröffentlichungstag und Bekanntmachung des Hinweises auf die Patenterteilung: **08.04.2020**
(21) Anmeldenummer: 18164868.4
(22) Anmeldetag: 29.03.2018
(51) Int. Cl.: A01C 7/00, A01C 14/00, A01C 21/00, A01B 79/00

(54) **VERFAHREN ZUM AUSSÄHEN VON WALDSAMEN MIT EINER BEWEGBAREN SAATMASCHINE**
METHOD FOR SOWING FOREST SEEDS WITH A MOVABLE SOWING MACHINE
PROCÉDÉ D'ENSEMENCEMENT DES SEMENCES FORESTIÈRES AU MOYEN D'UN SEMOIR MOBILE

(30) Priorität: 30.03.2017 DE 202017101886 U
(43) Veröffentlichungstag der Anmeldung: 03.10.2018
(73) Patentinhaber: Schmidt, Robert, 09627 Bobritzsch (OT Sohra) (DE)
(72) Erfinder: Schmidt, Robert, 09627 Bobritzsch (OT Sohra) (DE)
(74) Vertreter: Hauck Patentanwaltspartnerschaft mbB

(56) Entgegenhaltungen:
- EP-A1- 2 104 413
- WO-A1-2013/135971
- US-A- 3 605 908
- US-A1- 2017 055 433
- US-B1- 6 386 128

## Beschreibung

Die Erfindung betrifft ein Verfahren zum Aussähen von Waldsamen in einen Waldboden mit einer bewegbaren Saatmaschine.

Für die Aussaat von Waldsamen bekannt sind motorgetriebene oder manuell und mit Hilfe von Zugtieren durch den Wald bewegte Saatmaschinen. Die EP 2 781 145 B1 beschreibt ein Scheibenräumgerät und Verfahren zur Herstellung von Saatstreifen für die Waldsaat von Nadelbaumarten. Die EP 2 944 176 beschreibt ein Waldsägerät und ein Verfahren zum Aussähen von Laubbaumarten. Bei der Aussaat mittels herkömmlicher Saatmaschinen wird die Lage der zu bearbeitenden Arbeitsfläche von der Bedienperson ermittelt und die Bearbeitung der Arbeitsflächen an die vor Ort vorliegenden Bedingungen angepasst. Dies ist anspruchsvoll, begrenzt die Saatleistung und kann zu Fehlern führen, indem das Saatgut auf falschen oder ungeeigneten Flächen ausgebracht wird. Ferner ist im Falle einer Beauftragung oder einer Lizenz zur Aussaat von Waldsamen der genauere Nachweis der erbrachten Leistung erschwert. Weitere Sämaschinen für den Forsteinsatz sind offenbart in WO 2013/135971 A1 und US 3605908 A. Sämaschinen für die Aussaat auf einem Feld sind offenbart in US 6386128 B1, EP 2104413 A1 und US 2017/055433 A1.

Davon ausgehend liegt der Erfindung die Aufgabe zugrunde, ein Verfahren zum Aussähen von Waldsamen in einem Waldboden mit einer bewegbaren Saatmaschine bereitzustellen, welches die Durchführung und den Nachweis der Aussaat erleichtert.

Die Aufgabe wird durch ein Verfahren mit den Merkmalen von Anspruch 1 gelöst. Vorteilhafte Ausgestaltungen des Verfahrens sind in den Unteransprüchen angegeben.

Das erfindungsgemäße Verfahren zum Aussähen von Waldsamen in einen Waldboden mit einer bewegbaren Saatmaschine umfasst ein Ortungssystem.

Das Ortungssystem ermöglicht aus der Nähe und/oder aus der Ferne eine Positionsbestimmung der Saatmaschine, sodass jederzeit feststellbar ist, wo sich die Saatmaschine befindet. Hierdurch wird im Falle von Betriebsstörungen oder falls die Saatmaschine entwendet wird, das Auffinden der Saatmaschine erleichtert. Ferner ist es mit Hilfe des Ortungssystems möglich, die mittels der Saatmaschine erbrachte Saatleistung zu überprüfen, insbesondere die mittels der Saatmaschine zurückgelegten Strecken und bearbeiteten Flächen zu ermitteln. Hierdurch ist eine Kontrolle und/oder eine Aufzeichnung der korrekten Ausführung von Aufträgen und Ausübung von Lizenzen möglich. Die Kontrolle und/oder Aufzeichnung kann an der Saatmaschine und/oder von einer zentralen Stelle aus erfolgen. Gemäß einer Ausführungsart der Erfindung sind eine oder mehrere Saatmaschinen mit einem Ortungssystem ausgestattet. Sämtliche Saatmaschinen können dezentral und/oder von nur einer oder von mehreren zentralen Stellen überwacht werden. Gemäß einer weiteren Ausführungsart ist die dezentrale und/oder zentrale Stelle ein Smartphone, Tablet oder PC, vorzugsweise ein Tablet oder PC mit Zugang zu einem Telekommunikationsnetzwerk, vorzugsweise über ein Mobilfunkmodem.

Gemäß einer Ausführungsart umfasst das Ortungssystem eine Einrichtung zur Positionsbestimmung und einen Sender, vorzugsweise einen Mobilfunksender oder ein Mobiltelefon, mit dem die von der Einrichtung zur Positionsbestimmung ermittelten Positionsdaten drahtlos gesendet werden, sodass sie von einem räumlich entfernten Empfänger empfangen werden können. Gemäß einer bevorzugten Ausführungsart ist das Ortungssystem ein GPS-Tracker.

Gemäß einer weiteren Ausführungsart ist das Ortungssystem fest mit der Saatmaschine verbunden.

Gemäß einer weiteren Ausführungsart ist das Ortungssystem nicht ohne Zerstörung von der Saatmaschine lösbar. Gemäß einer weiteren Ausführungsart ist hierfür das Ortungssystem in einen Rahmen oder in ein anderes Strukturelement der Saatmaschine eingeschweißt.

Ferner wird die Aufgabe durch eine Vorrichtung zum Aussähen von Waldsamen mit einer bewegbaren Saatmaschine gelöst, die mindestens eine Einrichtung zum Erfassen der von der Saatmaschine erbrachten Saatleistung umfasst.

Dadurch, dass die Anordnung mindestens eine Einrichtung zum Erfassen der von der Saatmaschine erbrachten Saatleistung aufweist, kann die erfolgreiche Durchführung der Aussaat leicht kontrolliert und nachgewiesen werden. Hierdurch werden die Durchführung der Aussaat sowie die korrekte Ausführung von Aufträgen und Ausübung von Lizenzen insbesondere hinsichtlich zu bearbeitender Fläche, Saatstrecke, Ausbringungsmenge und/oder Art des Saatgutes erleichtert.

Gemäß einer bevorzugten Ausführungsart ist die Einrichtung zum Erfassen der erbrachten Saatleistung eine Einrichtung zum Erfassen der Länge und/oder der Breite und/oder des Profils und/oder der Lage der zurückgelegten Saatstrecke oder Saatstrecken (Saatstrecke(n)) (z.B. entlang einer Saatrille oder einem Saatstreifen oder eines Saatplatzes) und/oder der Größe und/oder der Lage der bearbeiteten Arbeitsfläche oder Arbeitsflächen (Arbeitsfläche(n)) und/oder der ausgebrachten Saatgutmenge und/oder der ausgebrachten Saatgutart. Kurze begrenzte Saatstrecken bis 2 m, vorzugsweise bis 1 m, vorzugsweise bis 0,5 m werden als Saatplätze bezeichnet. Mehrere eng beieinanderliegende Saatplätze bilden einen größeren Saatplatz. Diese können in einem Abstand zueinander liegen oder einander berühren oder teilweise überdecken, insbesondere kreuzen. Das Säen von Saatplätzen wird auch als "Plätzesaat" bezeichnet. Durch Erfassen der Länge und/oder der Breite und/oder des Profils und/oder der Lage der Saatstrecke(n) kann die Ausführung der geplanten Aussaat nach Umfang und Gebiet sichergestellt werden. Dies gilt auch für die Erfassung der Größe und/oder der Lage der bearbeiteten Arbeitsfläche(n). Die optimale Länge der Saatstrecke(n) pro Flächeneinheit hängt von der Baumart und dem waldbaulichen Ziel des stehenden Waldbestands ab. Durch Erfassen der ausgebrachten Saatgutmenge kann sichergestellt werden, dass die für die erfolgreiche Aussaat vom Auftraggeber gewünschte bzw. die optimale Saatgutmenge ausgebracht wird. Die optimalen Saatgutmengen hängen von der jeweiligen Baumart und der Zielstellung für den Waldbestand ab und differieren stark. Durch Erfassen der Länge der Saatstrecke(n) und/oder der Breite der Saatstrecke(n) und/oder des Profils der Saatstrecke(n) und/oder der Lage der Saatstrecke(n) und/oder der ausgebrachten Saatgutmenge kann sichergestellt und nachgewiesen werden, dass optimale Parameter eingehalten werden. Durch Erfassen der ausgebrachten Saatgutart kann die Durchführung der beauftragten Aussaat hinsichtlich der Saatgutart kontrolliert und nachgewiesen werden.

Gemäß einer weiteren Ausführungsart ist die Einrichtung zum Erfassen der Länge der zurückgelegten Saatstrecke(n) ein Streckenzähler, der mit einem auf dem Boden abrollbaren Rad der Saatmaschine gekoppelt ist. Gemäß einer weiteren Ausführungsart ist der Streckenzähler ein mit dem Rad mechanisch gekoppelter mechanischer Streckenzähler, beispielsweise wie er bei einem Hodometer oder in Kraftfahrzeugen Verwendung findet. Bei einer anderen Ausführungsart ist der Streckenzähler ein mit einem die Umdrehung des Rades erfassenden ersten Sensor verbundener elektronischer Zähler. Hierbei können ebenfalls Systeme aus der Kraftfahrzeugtechnik Verwendung finden. Gemäß einer bevorzugten Ausführungsart ist der Streckenzähler plombiert, um Manipulationen zu verhindern.

Gemäß einer weiteren Ausführungsart ist die Einrichtung zum Ermitteln der Saatstrecke(n) eine Einrichtung zum Ermitteln der Position und eine damit verbundene Einrichtung zum Ermitteln der zurückgelegten Wegstrecke anhand der von der Einrichtung zum Ermitteln der Position ermittelten Positionen, wobei die Einrichtung zum Ermitteln der Position und die Einrichtung zum Ermitteln der zurückgelegten Wegstrecke an der Saatmaschine angeordnet oder tragbar ausgebildet sind, sodass sie von einer die Saatmaschine bei der Aussaat begleitenden Bedienperson tragbar sind. Diese Ausführungsart ermöglicht eine besonders präzise und gegen Manipulationen geschützte Ermittlung der zurückgelegten Wegstrecke.

Gemäß einer weiteren Ausführungsart ist die Einrichtung zum Ermitteln der Saatstrecke(n) drahtgebunden oder drahtlos mit einem Rechner (Computer) verbunden, in dem die Saatstrecke dokumentiert und/oder Bearbeitungen wie Lizenzabrechnungen ausgeführt werden. Die jeweiligen Daten können mittels einer entsprechenden Software verarbeitet werden. Gemäß einer weiteren Ausführungsart wird/werden die Saatstrecke(n) gemeinsam mit Positionsdaten, dem aktuellen Datum, Bearbeitungszeit, einer Auftragsidentifikation, Identifikation der Bedienperson und/oder Wetterdaten gespeichert, um die Dokumentation und/oder sonstige Weiterverarbeitungen zu erleichtern. Gemäß einer weiteren Ausführungsart werden die Daten zumindest teilweise automatisch ermittelt und von der Einrichtung zum Ermitteln der Saatstrecke(n) an einen Rechner übermittelt. Gemäß einer weiteren Ausführungsart werden die Daten wie Auftragsidentifikation, Identifikation der Bedienperson, Wetterdaten, Datum, Bearbeitungszeit und/oder Positionsdaten von der Bedienperson eingegeben und übermittelt. Gemäß einer weiteren Ausführungsart wird die Bedienperson über eine Ein-/Ausgabeeinrichtung zur Eingabe der Daten aufgefordert.

Gemäß einer weiteren Ausführungsart umfasst die Einrichtung zum Erfassen der ausgebrachten Saatgutmenge mindestens einen die Ausbringungsmenge einer Dosiereinrichtung der Saatmaschine zum Ausbringen des Saatgutes erfassenden zweiten Sensor und/oder umfasst die Einrichtung zum Erfassen der ausgebrachten Saatgutart zumindest einen die von der Dosiereinrichtung abgegebene Saatgutart erfassenden dritten Sensor und/oder umfasst die Einrichtung zum Erfassen der ausgebrachten Saatgutmenge und/oder der Saatgutart eine Eingabeeinrichtung zum Eingeben der Saatgutmenge und/oder der Saatgutart.

Gemäß einer weiteren Ausführungsart ist die Einrichtung zum Erfassen der ausgebrachten Saatgutmenge ein Zählwerk, das mit einem Dosierelement der Dosiereinrichtung mechanisch gekoppelt ist, beispielsweise mit einem Zellenrad eines Zellenraddosierers. Gemäß einer anderen Ausführungsart umfasst die Zähleinrichtung eine die Ausbringung der Dosiereinrichtung erfassenden zweiten Sensor und einen damit verbundenen elektronischen Zähler. Beispielsweise erfasst der zweite Sensor die Drehungen eines Zellenrades eines Zellenraddosierers. Gemäß einer weiteren Ausführungsart ist der dritte Sensor eine Kamera zum optischen Erfassen des ausgebrachten Saatguts oder eine Einrichtung zum Erfassen von Parametern (z.B. mittlere Korngröße, Korngrößenverteilung, Farbe, Gewicht des Saatgutes), die eine Bestimmung der Saatgutart ermöglichen. Gemäß einer weiteren Ausführungsart ist die Eingabeeinrichtung eine Tastatur oder ein Mikrofon. Bevorzugt ist sie eine Ein-/Ausgabeeinrichtung, die es beispielsweise außer der Eingabe ermöglicht, eine Aufforderung zur Eingabe und/oder eine Bestätigung einer Eingabe auszugeben, beispielsweise ein Touchscreen oder ein Headset.

Ferner wird die Aufgabe durch ein Verfahren gelöst, umfassend
- eine Einrichtung zur Positionsbestimmung, die an der Saatmaschine angeordnet oder ausgebildet ist, von einer die Saatmaschine beim Aussähen begleitenden Bedienperson getragen zu werden,
- eine Einrichtung zur Bereitstellung eines Bearbeitungsplans zur Abarbeitung von Arbeitsflächen, die auf der Saatmaschine angeordnet ist oder von einer die Saatmaschine begleitenden Bedienperson tragbar ist, und
- eine elektronische Steuerungseinrichtung zum Ermitteln von Steuerungsanweisungen, die anhand der von der Einrichtung zur Positionsbestimmung ermittelten Positionsdaten Steuerungsanweisungen für das Abarbeiten der Arbeitsflächen gemäß dem Bearbeitungsplan bereitstellt.

Bei dem erfindungsgemäßen Verfahren wird durch die Bestimmung der jeweiligen Position der Saatmaschine, die Bereitstellung eines Bearbeitungsplanes und die Bereitstellung von Steuerungsanweisungen zum Steuern der Saatmaschine, sodass bei den jeweils ermittelten Positionen der Bearbeitungsplan zur Ausführung kommt, die korrekte Ausführung der geplanten Aussaat und deren Dokumentation unterstützt. Die Steuerungsanweisungen sind beispielsweise Anweisungen, die einer Bedienperson mittels einer Ausgabeeinrichtung gegeben werden, die auf der Saatmaschine angeordnet oder von der Bedienperson mitgeführt wird. Bei der Ausgabeeinrichtung handelt es sich beispielsweise um einen Lautsprecher, einen Kopfhörer und/oder um ein Display.

Gemäß einer anderen Ausführungsart sind an der Saatmaschine mit der elektronischen Steuerungseinrichtung verbundene Aktoren vorhanden, die ausgebildet sind, nach Maßgabe der von der elektronischen Steuerungseinrichtung erteilten Steuerungsanweisungen automatisch die Saatmaschine zu steuern, z.B. diese zu lenken und/oder die Abgabe des Saatgutes zu steuern. Diese Ausführungsart ermöglicht ein autonomes Abarbeiten des Bearbeitungsplanes durch eine motorgetriebene Saatmaschine. Es ist aber auch möglich, die Saatmaschine hierfür mittels eines Zugtieres oder mittels einer Person fortzubewegen, wobei z.B. die Lenkung der Saatmaschine und/oder die Steuerung der Abgabe des Saatgutes von der Automatik übernommen wird.

Der Bearbeitungsplan kann beispielsweise von der Bedienperson so ermittelt werden, dass die geplante Aussaat sichergestellt wird, und von der Bedienperson eingegeben werden. Die Bedienperson bedient sich hierbei dem Hilfsmittel von Kartenmaterialien, in denen der Baumbestand und die Topographie des Geländes eingetragen ist. Weitere nicht erfindungsgemässe Hilfsmittel wären Fotografien mittels Satelliten oder anderer gesteuerter Flugobjekte oder Erkenntnissen oder Aufzeichnungen aufgrund Begehung der Arbeitsfläche. Das Kartenmaterial liegt in elektronischer Form vor und wird in dieser Form verarbeitet. Erfindungsgemäß wird der Bearbeitungsplan unter Auswertung der vorerwähnten Unterlagen automatisch erstellt. Für die Erstellung des Bearbeitungsplans werden erfolgreich erprobte Strategien verwendet, beispielsweise hinsichtlich einer erfolgreichen Aussaat von Saatgut auf einem Gelände, das eine hierfür besonders geeignete Topographie, Ausrichtung oder Pflanzenbestand aufweist. Auch die Beschaffenheit des Bodens kann ggf. über in einer Datenbank hinterlegte Daten und/oder Untersuchungen vor Ort in die Erstellung des Bearbeitungsplanes einfließen. Gemäß einer einfachen Ausführungsart besteht der Bearbeitungsplan in der Vorgabe von bestimmten geographischen Koordinaten, die nacheinander von der Saatmaschine angefahren werden müssen. Hierbei ermittelt die Steuerungseinrichtung die Strecke zwischen den vorgegebenen Koordinaten selbsttätig. Gemäß einer weiteren Ausführungsart gibt der Bearbeitungsplan der Saatmaschine die zurückzulegende Strecke vor. Gemäß einer weiteren Ausführungsart weist die Saatmaschine mindestens einen vierten Sensor auf, der lokale Hindernisse oder andere Störungen ermittelt und ermittelt die Steuerungseinrichtung eine Änderung der Bearbeitungsstrecke, welche die Störung umgeht.

Gemäß einer weiteren Ausführungsart umfasst die Vorrichtung ein Navigationssystem, welches mindestens eine der folgenden Einrichtungen umfasst: Einrichtung zur Positionsbestimmung, Einrichtung zur Vorgabe von Arbeitsflächen, Einrichtung zur Festlegung eines Bearbeitungsplanes.

Gemäß einer weiteren Ausführungsart umfasst die Saatmaschine eine Blockiereinrichtung, die das Ausbringen von Saatgut blockiert, wenn die Einrichtung zum Erfassen der Saatleistung eine Betriebsstörung aufweist und/oder angeforderte Daten nicht zur Verfügung gestellt werden und/oder das Ortungssystem von der Saatmaschine getrennt oder nicht in Betrieb ist, und das Ausbringen von Saatgut nicht blockiert, wenn die Einrichtung zum Erfassen der Saatleistung störungsfrei ist, und/oder das Ortungssystem mit der Saatmaschine verbunden ist und in Betrieb ist und/oder angeforderte Daten eingegeben sind. Diese Ausgestaltung verhindert den Betrieb der Saatmaschine, wenn eine Sicherstellung bzw. Dokumentation der geplanten Saatleistung nicht möglich ist.

Gemäß einer weiteren Ausführungsart ist die Einrichtung zur Positionsbestimmung ein Satelliten-Navigationssystem wie GPS oder Galileo oder ein Peilsystem. Gemäß einer weiteren Ausführungsart umfasst das Peilsystem mindestens einen Peilsender und einen Peilempfänger, wobei der Peilempfänger auf der Saatmaschine angeordnet ist oder so ausgebildet ist, dass er von einer die Saatmaschine beim Aussähen begleitenden Bedienperson tragbar ist.

Gemäß einer weiteren Ausführungsart ist die Saatmaschine ein von Mensch und/oder Tier gezogene und/oder geschobene Saatmaschine, ein motorgetriebenes Saatgerät oder Saataggregat oder Arbeitsgerät mit mindestens einem angebauten Saatgerät oder Saataggregat, insbesondere eine Forstmaschine, ein Bagger, Kran oder Greifer mit mindestens einem angebauten Saatgerät oder Saataggregat oder ein seilgetriebenes Saatgerät oder Saataggregat oder Arbeitsgerät mit mindestens einem angebauten Saatgerät oder Saataggregat oder ein Handsägerät.

Ein Saatgerät ist ein bewegliches Werkzeug oder Hilfsmittel zum Aussäen von Waldsamen. Ein Saataggregat ist eine Einheit aus mehreren zusammenwirkenden Saatgeräten.

Gemäß einer weiteren Ausführungsart ist das motorgetriebene Arbeitsgerät ein durch mindestens einen Verbrennungsmotor und/oder mindestens einen Elektromotor angetriebenes Arbeitsgerät.

Gemäß einer weiteren Ausführungsart ist das motorgetriebene Saatgerät oder Saataggregat oder Arbeitsgerät mit mindestens einem angebauten Saatgerät ein selbstfahrendes (z.B. ferngesteuertes) oder autonom fahrendes (selbständig fahrendes) Fahrzeug.

Gemäß einer weiteren Ausführungsart fährt das Saatgerät oder Saataggregat oder Arbeitsgerät auf Rädern oder auf Raupen, d.h. ist ein Räderfahrzeug oder ein Kettenfahrzeug.

Ferner kann eine Vorrichtung zum Aussähen von Waldsamen bereitgestellt werden, umfassend ein motorgetriebenes Arbeitsgerät mit einem Greifwerkzeug und/oder einer Schnittstelle für ein Anbaugerät und ein Saataggregat oder Saatgerät, das ausgebildet ist, in Anbaustellung von dem Greifwerkzeug gegriffen zu werden und/oder mit der Schnittstelle verbunden zu sein.

Die vorgennante Vorrichtung ist auf einfache Weise durch Verbinden eines Saataggregates oder Saatgerätes mit einem motorgetriebenen Arbeitsgerät zusammenstellbar. Bei dem motorgetriebenen Arbeitsgerät kann es sich um ein herkömmliches Arbeitsgerät handeln, das ohnehin in einem Forstbetrieb oder dergleichen vorhanden ist. Gemäß einer Ausführungsart handelt es sich bei dem motorgetriebenen Arbeitsgerät um eine Forstmaschine (Waldmaschine), einen Minibagger oder anderen Bagger oder einen Kran.

Die Verbindung des Saataggregates oder Saatgerätes mit dem motorgetriebenen Arbeitsgerät kann auf einfache Weise dadurch hergestellt werden, dass es von einem Greifwerkzeug des selbstfahrenden Arbeitsgerätes gegriffen oder mit einer Schnittstelle für ein Anbaugerät des motorgetriebenen Arbeitsgerätes verbunden wird.

Bei der Schnittstelle kann es sich um eine standardisierte Schnittstelle handeln, die auch für andere Arbeitsgeräte nutzbar ist. Gemäß einer weiteren Ausführungsart umfasst die Schnittstelle Einrichtungen zum Fixieren des Anbaugerätes am Arbeitsgerät, insbesondere an einem Ausleger des Arbeitsgerätes. Gemäß einer weiteren Ausführungsart umfasst sie Einrichtungen zum Übertragen einer Axialbewegung, einer Drehbewegung oder einer anderen Bewegung vom Arbeitsgerät auf das Anbaugerät. Diese Einrichtungen können zum Antreiben von Scheiben und/oder eines Dosiergerätes für Saatgut des Saataggregates oder Saatgerätes benutzt werden. Gemäß einer anderen Ausführungsart werden die Scheiben gedreht, indem das Saataggregat oder Saatgerät mittels des Arbeitsgerätes auf dem Waldboden verlagert wird, wobei die Scheiben abrollen. Hierbei kann ein auf dem Saataggregat oder Saatgerät angeordnetes Dosiergerät von den Scheiben angetrieben werden.

Gemäß einer weiteren Ausführungsart umfasst die Vorrichtung einen Adapter, der ausgebildet ist, das Saatgerät oder Saataggregat mit dem Greifwerkzeug und/oder mit der Schnittstelle zu verbinden.

Für die Verbindung bzw. das Aufnehmen des Saataggregates oder Saatgerätes von einem Greifwerkzeug hat gemäß einer weiteren Ausführungsart das Saataggregat oder Saatgerät eine Außenoberfläche, die komplementär zu der Innenoberfläche des Greifwerkzeugs in einer Stellung ausgebildet ist, die dieses beim Greifen eines Gegenstandes annimmt. Gemäß einer weiteren Ausführungsart handelt es sich bei dem Greifwerkzeug um einen Zweischalengreifer oder um einen Mehrschalengreifer, der schalenförmige Greifelemente aufweist, die um horizontale Achsen aus einer geöffneten Stellung in einer mehr oder weniger geschlossenen Stellung schwenkbar sind. Gemäß einer weiteren Ausführungsart ist die Außenoberfläche des Saataggregates oder Saatgerätes so ausgebildet, dass sie komplementär zu der Innenoberfläche der Greifelemente des Greifwerkzeugs in zumindest teilweise zusammengeschwenkter Stellung ist. Somit liegt das Greifwerkzeug mit den Greifelementen eng und flächig anliegend an Saataggregat oder Saatgerät an, sodass das Greifwerkzeug das Saataggregat oder Saatgerät mehr oder weniger spielfrei halten und führen kann.

Gemäß einer weiteren Ausführungsart ist das Greifwerkzeug oder die Schnittstelle am Ende eines Auslegers des Arbeitsgerätes angeordnet. Gemäß einer weiteren Ausführungsart ist der Ausleger ein Knickarm oder ein Teleskoparm. Hierfür können herkömmliche Arbeitsgeräte mit Auslegern verwendet werden. Durch Bewegen des Auslegers kann das Arbeitsgerät des Saataggregat oder Saatgerät entlang einer Saatstrecke verlagern. Hierbei kann das Arbeitsgerät auf einer vorgegebenen Fahrspur stehen oder entlang einer vorgegebenen Fahrspur verfahren werden und Arbeitsflächen in einem größeren Bereich neben der Fahrspur bearbeiten. Derartige Fahrspuren (z.B. Rückegassen) sind im Forst vielfach mit einem Abstand von 40 m oder 20 m angelegt. Durch Verlagern des Saatgerätes oder Saataggregates von den Fahrspuren aus können hohe Arbeitsgeschwindigkeiten erreicht und unwegsames oder steiles Gelände bearbeitet werden. Zudem wird hierdurch Bodenverdichtung vermieden.

Gemäß einer weiteren Ausführungsart weist das Arbeitsgerät oder das Saataggregat oder Saatgerät eine Tiefenbegrenzung zum Begrenzen der Eindringtiefe des Saatstreifens oder der Saatrille in den Boden auf. Gemäß einer weiteren Ausführungsart ist die Tiefenbegrenzung ein mit einem Ausleger oder einem Greifwerkzeug oder einem Saataggregat oder Saataggregat gekoppelte Rolleneinrichtung, die die Eindringtiefe des Saataggregats oder Saatgeräts in den Waldboden begrenzt. Gemäß einer weiteren Ausführungsart ist die Tiefenbegrenzung mit dem Saatgerät oder Saataggregat fest verbunden.

Gemäß einer weiteren Ausführungsart umfasst die Tiefenbegrenzung mindestens einen Sensor, der ausgebildet ist, den Abstand des Sensors von der Bodenoberfläche zu erfassen, eine mit dem Sensor verbundene Steuerungseinrichtung und eine mit der Steuerungseinrichtung verbundene Stelleinrichtung, die ausgebildet ist, die Lage des Saatgeräts oder des Saataggregats relativ zur Bodenoberfläche auf einen vorgegebenen Wert einzustellen.

Die Erfindung wird nachfolgend anhand der anliegenden Zeichnungen von Ausführungsbeispielen näher erläutert.

In den Zeichnungen zeigen:
- Fig. 1: einen Raupenbagger mit Mehrarmgreifer und Scheibenräumgerät zum Herstellen von Saatstreifen in einer Perspektivansicht von vorn und von der Seite;
- Fig. 2: einen weiteren Raupenbagger mit Mehrarmgreifer und Scheibenräumgerät in einer Ansicht von der Seite;
- Fig. 3: einen weiteren Raupenbagger mit Mehrarmgreifer und Waldsägerät mit gezahnten Scheiben in einer Perspektivansicht von vorn und von der Seite;
- Fig. 4: ein autonom fahrendes Waldarbeitsgerät mit Scheibenräumgerät in einer Perspektivansicht von vorn und von der Seite;
- Fig. 5: eine Forstmaschine mit Mehrarmgreifer und Scheibenräumgerät in einer Ansicht von vorn und von der Seite;
- Fig. 6: dieselbe Forstmaschine mit Waldsägerät mit gezahnten Scheiben in einer Perspektivansicht von vorn und von der Seite;
- Fig. 7: Bearbeitungsschema bei der Durchführung von Waldsaaten ausgehend von einer Fahrspur in der Draufsicht.

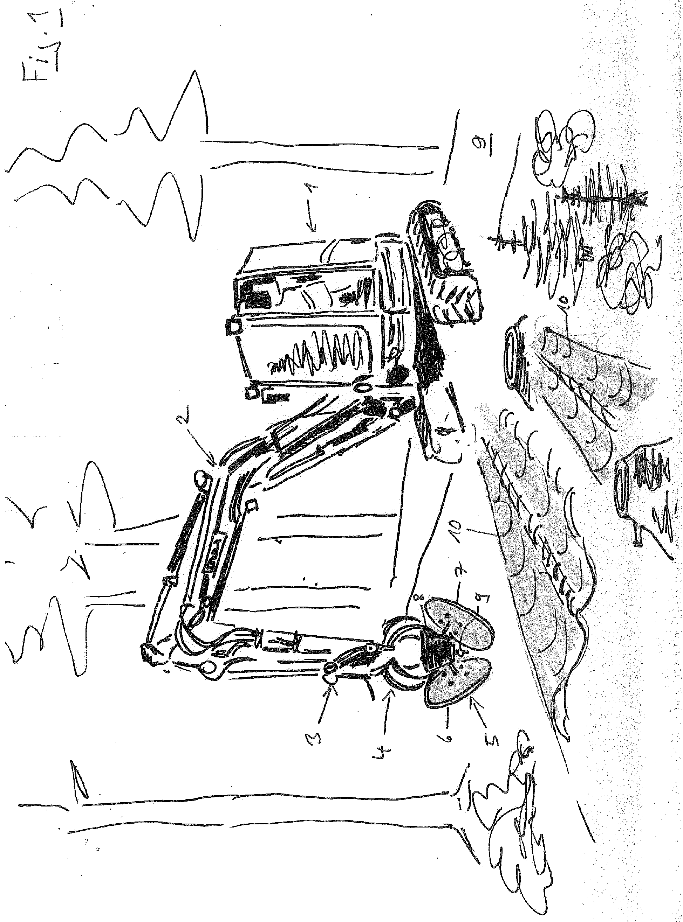

Gemäß Fig. 1 hat ein Raupenbagger 1 am Ende eines Auslegers 2 in Form eines Knickarmes eine Schnittstelle 3 für ein Anbaugerät. An der Schnittstelle 3 ist ein Greifwerkzeug 4 in Form eines Mehrarmgreifers montiert.

Das Greifwerkzeug 4 greift ein Scheibenräumgerät 5 zur Herstellung von Saatstreifen für die Waldsaat von Nadelbaumarten.

Das Scheibenräumgerät weist eine Anordnung von Scheiben 6, 7, einen Vorratsbehälter 8 und eine Dosiervorrichtung 9 für Saatgut auf, wie in der EP 2 781 145 B1 beschrieben. Im Unterschied zu dem darin beschriebenen Scheibenräumgerät weist das Scheibenräumgerät 5 jedoch nur einen kompakten Geräteträger in Form eines kurzen ersten Profilträgers auf, an dem die Drehachsen gehalten sind, welche die beiden Scheiben 6, 7 lagern. Außerdem weist das Scheibenräumgerät 5 keine zusätzliche Stützachse auf.

Zentral zwischen den beiden Scheiben sitzt der Vorratsbehälter 8. Die Außenoberfläche des Vorratsbehälters ist vorzugsweise so geformt, dass sie überall an der Innenoberfläche des Mehrarmgreifers in einem teilweise geschlossenem Greifzustand anliegt. Infolgedessen kann der Scheibenräumer 5 einfach durch teilweises Schließen des Greifwerkzeugs 4 um den Vorratsbehälter herum gekoppelt werden.

Ausgehend von einer Fahrspur 9 ist der Ausleger 2 manövrierbar, sodass das Scheibenräumgerät 5 beidseitig der Fahrspur 9 Saatstrecken 10 bearbeitet.

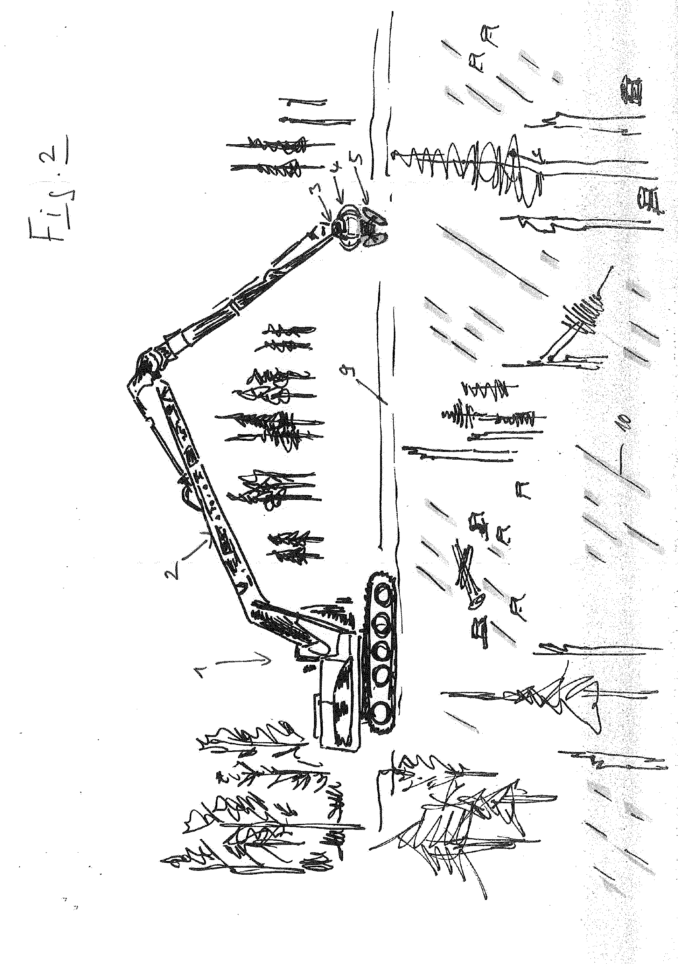

Gemäß Fig. 2 kann ein Raupenbagger 1 mit einem längeren Ausleger 2 beidseitig der Fahrspur 9 größere Bereiche mit Saatstrecken 10 versehen, u.a. Böschungen und Hänge.

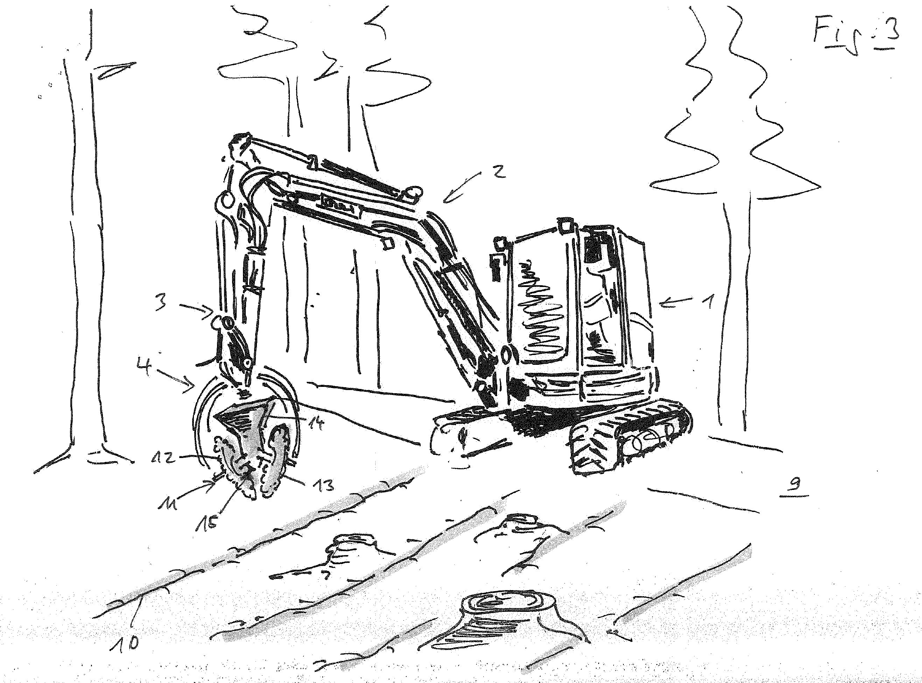

Gemäß Fig. 3 ist der Raupenbagger 1 mit einem Waldsägerät 11 zur Aussaat schwerfrüchtiger Laubbaumarten gekoppelt, das im Wesentlichen gemäß EP 2 944 176 B1 ausgebildet ist. Im Unterschied zu dem darin beschriebenen Waldsägerät sind die Lagerwellen der gezahnten Scheiben 12, 13 an einem kompakten Geräteträger gelagert, der auch einen Vorratsbehälter 14 für Saatgut und eine Dosiervorrichtung 15 trägt. Das Waldsägerät 11 weist keinen Schutzrahmen, keine Halterung für Zusatzgewichte und auch keinen Griff für die Manipulation des Gerätes im Gelände auf.

Die Außenoberfläche des Vorratsbehälters 14 ist wiederum so ausgebildet, dass dieser von dem Greifwerkzeug 4 gut gegriffen werden kann.

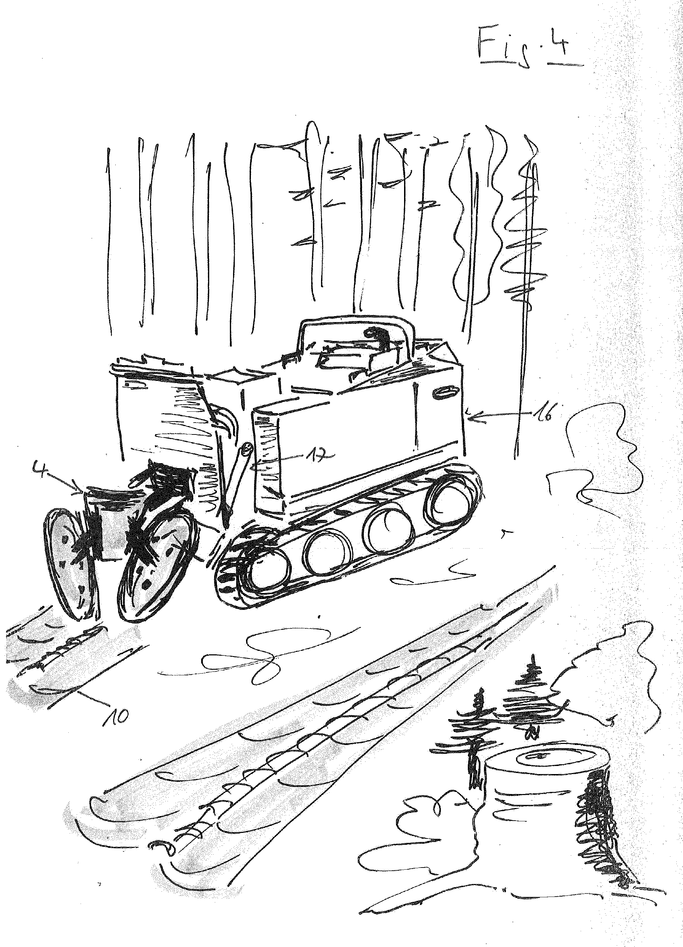

Gemäß Fig. 4 ist ein autonom fahrendes Waldarbeitsgerät 16 an einer Schnittstelle 17, die auch zur Aufnahme eines Fräsgerätes oder eines Räumgerätes dienen kann, mit einem Scheibenräumgerät 4 bestückt. Das Scheibenräumgerät 4 hat eine Schnittstelle, die komplementär zu der Schnittstelle des Waldarbeitsgerätes 16 ausgebildet ist, um mit diesem verbunden zu werden.

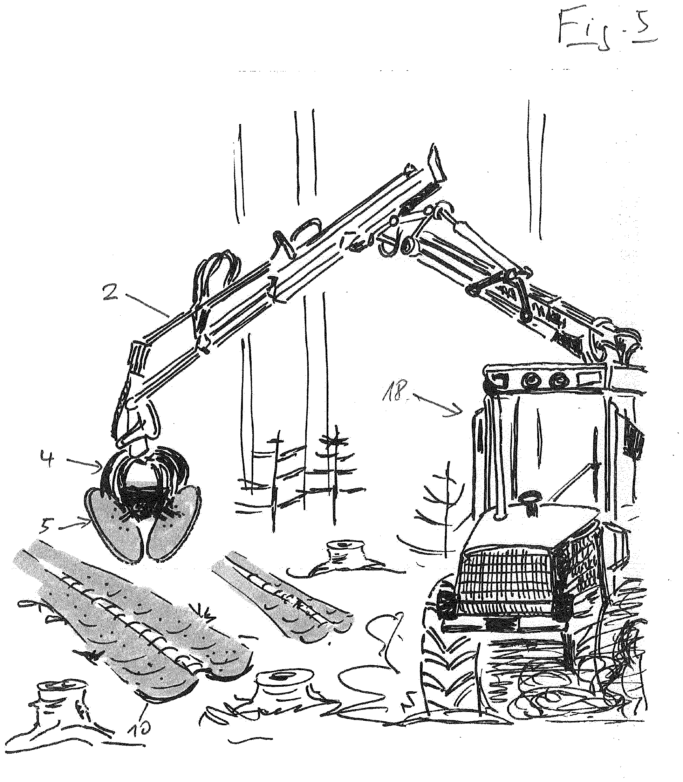

Gemäß Fig. 5 ist wiederum eine Forstmaschine 18 mit einem Greifwerkzeug an einem Ausleger 2 mit einem Scheibenräumgerät 5 gekoppelt.

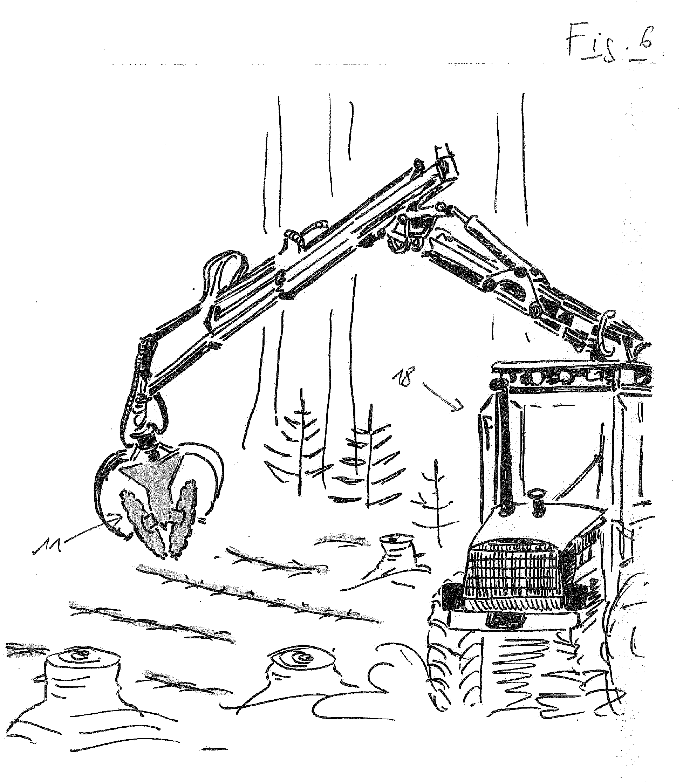

Gemäß Fig. 6 ist die Forstmaschine 18 mit dem Waldsägerät 11 gekoppelt.

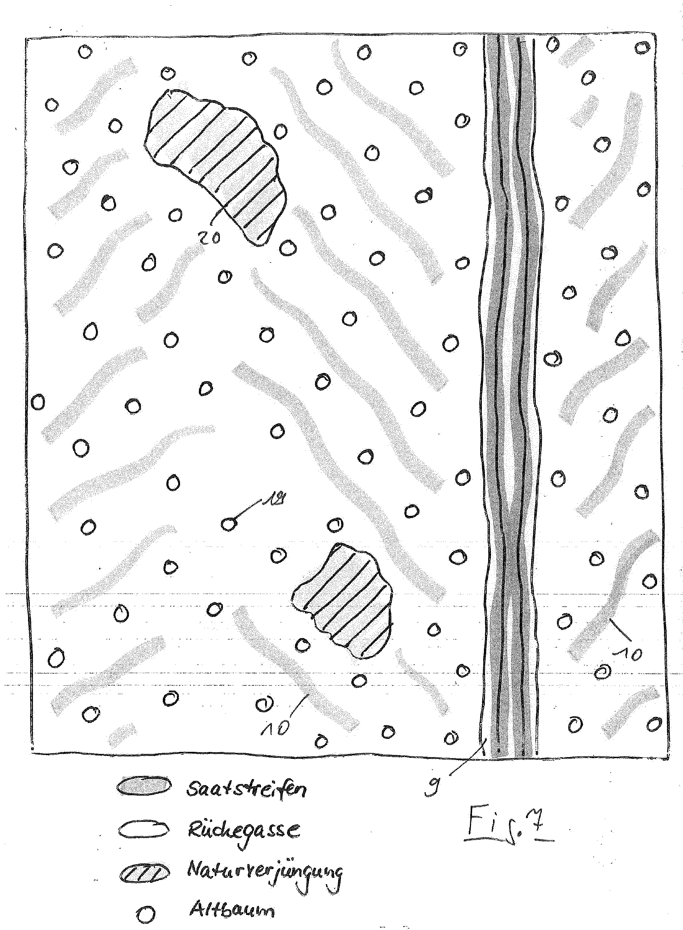

Gemäß Fig. 7 wird mittels der Vorrichtung gemäß Fig. 1 bis 6. ausgehend von einem Fahrweg 9 beidseitig Saatstrecken 10 in den Waldboden eingebracht. Das Einbringen ist an die Gegebenheiten vor Ort angepasst, insbesondere Altbaumbestand 19 oder Naturverjüngung 20.

## Patentansprüche

1. Verfahren zum Aussähen von Waldsamen in einen Waldboden mit einer bewegbaren Saatmaschine, umfassend
• ein Ortungssystem, das eine Einrichtung zur Positionsbestimmung ist, die insbesondere ein Satelliten-Navigationssystem wie GPS oder Galileo oder ein Peilsystem, an der Saatmaschine angeordnet oder ausgebildet ist, von einer die Saatmaschine beim Aussähen begleitenden Bedienperson getragen zu werden,
• eine Einrichtung zur Bereitstellung eines Bearbeitungsplanes zur Abarbeitung von Arbeitsflächen, die auf der Saatmaschine angeordnet ist oder von einer die Saatmaschine begleitenden Bedienperson tragbar ist, und
• eine elektronische Steuerungseinrichtung zum Ermitteln von Steuerungsanweisungen, die anhand der von der Einrichtung zur Positionsbestimmung ermittelten Positionsdaten Steuerungsanweisungen für das Abarbeiten der Arbeitsflächen gemäß dem Bearbeitungsplan bereitstellt,
• wobei der Bearbeitungsplan unter Auswertung von in elektronischer Form vorliegender Kartenmaterialien, in denen der Baumbestand und die Topographie des Geländes eingetragen ist, automatisch erstellt wird und für die Erstellung des Bearbeitungsplans erfolgreich erprobte Strategien verwendet werden.

2. Verfahren nach Anspruch 1, bei dem die Beschaffenheit des Bodens in die Erstellung des Bearbeitungsplanes einfließt.

3. Verfahren nach Anspruch 1 oder 2, bei der das Ortungssystem ein Satelliten-Navigationssystem wie GPS, insbesondere ein GPS-Tracker oder Galileo oder ein Peilsystem ist.

4. Verfahren nach einem der Ansprüche 1 bis 3, bei der das Ortungssystem fest mit der Saatmaschine verbunden ist und/oder nicht ohne Zerstörung von der Saatmaschine lösbar ist.

5. Verfahren gemäß einem der Ansprüche 1 bis 4, umfassend mindestens eine Einrichtung zum Erfassen der von der Saatmaschine erbrachten Saatleistung.

6. Verfahren nach Anspruch 3, bei der die Einrichtung zum Erfassen der erbrachten Saatleistung eine Einrichtung zum Erfassen der Länge der und/oder der Lage der zurückgelegten Saatstrecke oder Saatstrecken und/oder der Größe und/oder der Breite und/oder des Profils und/oder der Lage der bearbeiteten Arbeitsfläche oder Arbeitsflächen und/oder der ausgebrachten Saatgutmenge und/oder der ausgebrachten Saatgutart ist.

7. Verfahren nach einem der Ansprüche 1 bis 6, umfassend eine Ausgabeeinrichtung, die an der Saatmaschine angeordnet ist oder von einer die Saatmaschine beim Aussähen begleitenden Bedienperson tragbar ist, um Steuerungsanweisungen auszugeben.

8. Verfahren nach einem der Ansprüche 1 bis 7, umfassend an der Saatmaschine angeordnete, mit der elektronischen Steuerungseinrichtung verbundene Aktoren, die ausgebildet sind, nach Maßgabe der von der elektronischen Steuerungseinrichtung erteilten Steuerungsanweisungen die Saatmaschine automatisch zu steuern.

9. Verfahren nach einem der Ansprüche 1 bis 8, umfassend eine Einrichtung zum Speichern der geographischen Lage einer oder mehrerer Arbeitsflächen, auf denen das Saatgut auszusähen ist, wobei die Steuerungseinrichtung die eine oder die mehreren Arbeitsflächen entsprechend dem vorgegebenen Bearbeitungsplan abarbeitet.

10. Verfahren nach einem der Ansprüche 1 bis 9, umfassend ein Navigationssystem, welches mindestens eine der folgenden Einrichtungen umfasst: Einrichtung zur Positionsbestimmung, Einrichtung zur Vorgabe von Arbeitsflächen, Einrichtung zur Festlegung eines Bearbeitungsplans.

11. Verfahren nach einem der Ansprüche 1 bis 10, bei der die Saatmaschine eine Blockiereinrichtung umfasst, die das Ausbringen von Saatgut blockiert, wenn die Einrichtung zum Erfassen der Saatleistung eine Betriebsstörung aufweist und/oder das Ortungssystem von der Saatmaschine getrennt ist oder nicht in Betrieb ist und/oder angeforderte Daten nicht zur Verfügung gestellt werden und das Ausbringen von Saatgut nicht blockiert, wenn die Einrichtung zum Erfassen der Saatleistung störungsfrei ist und/oder das Ortungssystem mit der Saatmaschine verbunden ist und in Betrieb ist und/oder angeforderte Daten eingegeben sind.

12. Verfahren nach einem der Ansprüche 1 bis 11, bei der die Saatmaschine eine von Mensch und/oder Tier gezogene und/oder geschobene Saatmaschine, ein motorgetriebenes Saatgerät oder Saataggregat oder Arbeitsgerät mit mindestens einem angebautem Saatgerät oder Saataggregat, insbesondere eine Forstmaschine, ein Bagger, Kran oder Greifer mit mindestens einem angebautem Saatgerät oder Saataggregat oder ein seilgetriebenes Saatgerät oder Saataggregat oder Arbeitsgerät mit mindestens einem angebautem Saatgerät oder Saataggregat, oder ein Handsägerät ist.

13. Verfahren nach einem der Ansprüche 1 bis 12, umfassend ein motorgetriebenes Arbeitsgerät mit einem Greifwerkzeug (4) oder eine Schnittstelle (3) für ein Anbaugerät und ein Saatgerät oder ein Saataggregat, das ausgebildet ist, in Anbaustellung von dem Greifwerkzeug gegriffen zu werden und/oder mit der Schnittstelle verbunden zu sein.

14. Verfahren nach Anspruch 13, bei der das Saatgerät oder Saataggregat eine Außenoberfläche hat, die komplementär zu der Innenoberfläche des Greifwerkzeuges in einer Stellung ist, die dieses beim Greifen eines Gegenstandes annimmt.

15. Verfahren nach Anspruch 13 oder 14, umfassend mindestens eines der folgenden Merkmale:
• das Greifwerkzeug oder die Schnittstelle ist am Ende eines Auslegers (2) des Arbeitsgerätes (1) angeordnet,
• der Ausleger ist ein Knickarm oder ein Teleskoparm,
• das Arbeitsgerät ist eine Forstmaschine, ein Bagger oder ein Kran,
• das Arbeitsgerät ist durch mindestens einen Verbrennungsmotor und/oder durch mindestens einen Elektromotor angetrieben und/oder das Arbeitsgerät fährt auf Rädern oder auf Raupen,
• das Arbeitsgerät oder das Saataggregat oder Saatgerät weist eine Tiefenbegrenzung auf, die die Eindringtiefe des Saataggregats oder Saatgeräts in den Waldboden begrenzt.

## Claims

1. A method for sowing forest seeds in a forest floor with a movable sowing machine, comprising
• a locating system which is an apparatus for determining the position, in particular a satellite navigation system such as GPS or Galileo or a direction-finding system, which is arranged on the sowing machine or is configured to be carried by an operator accompanying the sowing machine during sowing,
• an apparatus for providing a processing plan for handling working areas, which apparatus is arranged on the sowing machine or can be carried by an operator accompanying the sowing machine, and
• an electronic control apparatus for establishing control instructions, which provides control instructions for handling the working areas according to the processing plan on the basis of the position data established by the apparatus for determining the position,
• wherein the processing plan is drawn up automatically, evaluating mapping materials which are available in electronic form, in which the tree population and the topography of the land are recorded and successfully tried-and-tested strategies are used for drawing up the processing plan.

2. The method according to Claim 1, in which the quality of the soil flows into the drawing up of the processing plan.

3. The method according to Claim 1 or 2, in which the locating system is a satellite navigation system such as GPS, in particular a GPS tracker or Galileo or a direction-finding system.

4. The method according to any one of Claims 1 to 3, in which the locating system is firmly connected to the sowing machine and/or cannot be detached from the sowing machine without being destroyed.

5. The method according to any one of Claims 1 to 4, comprising at least one apparatus for detecting the sowing capacity produced by the sowing machine.

6. The method according to Claim 3, in which the apparatus for detecting the sowing capacity produced is an apparatus for detecting the length of and/or the position of the sowing distance or sowing distances covered and/or the size and/or the width and/or the profile and/or the location of the processed working area or working areas and/or the quantity of seeds spread and/or the type of seeds spread.

7. The method according to any one of Claims 1 to 6, comprising an outputting apparatus which is arranged on the sowing machine or can be carried by an operator accompanying the sowing machine during sowing, in order to output control instructions.

8. The method according to any one of Claims 1 to 7, comprising actuators arranged on the sowing machine and connected to the electronic control apparatus, which are configured to automatically control the sowing machine in accordance with the control instructions issued by the electronic control apparatus.

9. The method according to any one of Claims 1 to 8, comprising an apparatus for storing the geographical location of one or more working areas in which the seeds are to be sown, wherein the control apparatus handles the one or the multiple working areas in accordance with the predefined processing plan.

10. The method according to any one of Claims 1 to 9, comprising a navigation system which comprises at least one of the following apparatuses: an apparatus for determining the position, apparatus for predefining working areas, apparatus for specifying a processing plan.

11. The method according to any one of Claims 1 to 10, in which the sowing machine comprises a blocking apparatus which blocks the spreading of seeds if the apparatus for detecting the sowing capacity has a system malfunction and/or the locating system is separated from the sowing machine or is not operating and/or the required data are not provided, and does not block the spreading of seeds if the apparatus for detecting the sowing capacity is trouble-free and/or the locating system is connected to the sowing machine and is operating and/or the required data are input.

12. The method according to any one of Claims 1 to 11, in which the sowing machine is a sowing machine pulled and/or pushed by a human and/or animal, a motor-driven sowing implement or sowing unit or working equipment having at least one attached sowing implement or sowing unit, in particular a forestry machine, an excavator, crane or gripper having at least one attached sowing implement or sowing unit or a cable-operated sowing implement or sowing unit or working equipment having at least one attached sowing implement or sowing unit, or a manual seed drill.

13. The method according to any one of Claims 1 to 12, comprising motor-driven working equipment having a gripping tool (4) or an interface (3) for an attachment and a sowing implement or a sowing unit which is configured to be gripped in the attachment position by the gripping tool and/or to be connected to the interface.

14. The method according to Claim 13, in which the sowing implement or sowing unit has an external surface which complements the inner surface of the gripping tool in a position which said gripping tool assumes when gripping an object.

15. The method according to Claim 13 or 14, comprising at least one of the following features:
• the gripping tool or the interface is arranged at the end of a boom (2) of the working equipment (1),
• the boom is an articulated arm or a telescopic arm,
• the working equipment is a forestry machine, an excavator or a crane,
• the working equipment is driven by at least one internal-combustion engine and/or by at least one electric motor and/or the working equipment drives on wheels or on tracks,
• the working equipment or the sowing unit or sowing implement has a depth restriction which restricts the penetration depth of the sowing unit or sowing implement into the forest floor.

## Revendications

1. Procédé pour le semis de semences forestières dans un sol forestier à l'aide d'un semoir mobile, comportant
• un système de localisation, consistant en un dispositif de détermination de la position, lequel est en particulier un système de navigation par satellite tel qu'un GPS ou un Galileo ou un radiogoniomètre disposé sur le semoir ou conçu pour être porté par un opérateur accompagnant le semoir lors du semis,
• un dispositif de mise à disposition d'un plan de traitement pour le traitement de surfaces de travail, lequel est disposé sur le semoir ou peut être porté par un opérateur accompagnant le semoir, et
• un dispositif de commande électronique destiné à définir des instructions de commande, lequel met à disposition des instructions de commande pour le traitement des surfaces de travail conformément au plan de traitement, à l'aide des données de position déterminées par le dispositif de détermination de la position,
• dans lequel le plan de traitement est établi automatiquement par évaluation de cartes sous forme électronique, dans lesquelles sont enregistrés la présence d'arbres et la topographie du site, et des stratégies éprouvées sont utilisées pour l'établissement du plan de traitement.

2. Procédé selon la revendication 1, dans lequel la nature du sol est intégrée à l'établissement du plan de traitement.

3. Procédé selon la revendication 1 ou 2, dans lequel le système de localisation est un système de navigation par satellite tel qu'un GPS, en particulier un pisteur GPS ou un Galileo ou un radiogoniomètre.

4. Procédé selon l'une des revendications 1 à 3, dans lequel le système de localisation est relié au semoir et/ou ne peut pas être détaché du semoir sans être détruit.

5. Procédé selon l'une des revendications 1 à 4, comportant au moins un dispositif destiné à détecter les performances de semis fournies par le semoir.

6. Procédé selon la revendication 3, dans lequel le dispositif de détection des performances de semis fournies est un dispositif de détermination de la longueur et/ou de l'emplacement du trajet de semis ou des trajets de semis parcouru(s) et/ou de la taille et/ou de la largeur et/ou du profil et/ou de l'emplacement de la surface de travail ou des surfaces de travail traitée(s) et/ou de la quantité de semences épandue et/ou du type de semences épandu.

7. Procédé selon l'une des revendications 1 à 6, comportant un dispositif d'émission disposé sur le semoir ou apte à être porté par un opérateur accompagnant le semoir lors du semis, destiné à émettre des instructions de commande.

8. Procédé selon l'une des revendications 1 à 7, comportant des acteurs disposés sur le semoir, reliés au dispositif de commande électronique, lesquels sont conçus pour commander automatiquement le semoir en fonction des instructions de commande délivrées par le dispositif de commande électronique.

9. Procédé selon l'une des revendications 1 à 8, comportant un dispositif d'enregistrement de l'emplacement géographique d'une ou de plusieurs surfaces de travail sur lesquelles les semences sont censées être semées, dans lequel le dispositif de commande traite les une ou plusieurs surfaces de travail en fonction du plan de traitement prédéfini.

10. Procédé selon l'une des revendications 1 à 9, comportant un système de navigation comportant l'un au moins des dispositifs suivants : un dispositif de détermination de la position, un dispositif de définition de surfaces de travail, un dispositif d'établissement d'un plan de traitement.

11. Procédé selon l'une des revendications 1 à 10, dans lequel le semoir comporte un dispositif de blocage bloquant l'épandage de semences lorsque le dispositif de détection des performances de semis présente une panne et/ou lorsque le système de localisation est séparé du semoir ou n'est pas actif et/ou lorsque des données demandées ne sont pas fournies, et ne bloquant pas l'épandage de semences lorsque le dispositif de détection des performances de semis n'est pas en panne et/ou le système de localisation est relié au semoir et est actif et/ou lorsque les données demandées ont été saisies.

12. Procédé selon l'une des revendications 1 à 11, dans lequel le semoir est un semoir tracté et/ou poussé par une personne et/ou un animal, un appareil de semis ou un agrégat de semis ou un appareil de travail entraîné par moteur, avec au moins un appareil de semis ou un agrégat de semis installé, en particulier un engin forestier, une pelleteuse, une grue ou un préhenseur avec au moins un appareil de semis ou un agrégat de semis installé, ou un appareil de semis ou un agrégat de semis ou un appareil de travail entraîné par câble, avec au moins un appareil de semis ou un agrégat de semis installé, ou un semoir manuel.

13. Procédé selon l'une des revendications 1 à 12, comportant un appareil de travail entraîné par moteur, avec un outil de préhension (4) ou une interface (3) pour un accessoire et un appareil de semis ou un agrégat de semis, lequel est conçu pour être saisi par l'outil de préhension dans la position de montage et/ou pour être relié à l'interface.

14. Procédé selon la revendication 13, dans lequel l'appareil de semis ou l'agrégat de semis possède une surface supérieure extérieure, laquelle est complémentaire à la surface supérieure intérieure de l'outil de préhension, dans une position destinée à recevoir celui-ci lors de la préhension d'un objet.

15. Procédé selon la revendication 13 ou 14, comportant l'une au moins des caractéristiques suivantes :
• l'outil de préhension ou l'interface est disposé(e) à l'extrémité d'une perche (2) de l'appareil de travail (1),
• la perche est un bras articulé ou un bras télescopique,
• l'appareil de travail est un engin forestier, une pelleteuse ou une grue,
• l'appareil de travail est entraîné par au moins un moteur à combustion et/ou par au moins un moteur électrique et/ou l'appareil de travail se déplace sur des roues ou sur des chenilles,
• l'appareil de travail ou l'agrégat de semis ou l'appareil de semis présente une limitation de profondeur, laquelle limite la profondeur d'introduction de l'agrégat de semis ou de l'appareil de semis dans le sol forestier.
